# EUROPEAN PATENT APPLICATION

(11) **EP 3 572 926 A1**
(43) Date of publication of application: **27.11.2019**
(21) Application number: 19175459.7
(22) Date of filing: 20.05.2019
(51) Int. Cl.: G06F 3/12, G06F 17/24

(54) **WEB CATALOG GENERATOR, PRINT ORDER PROCESSOR INCLUDING THE WEB CATALOG GENERATOR, PRINTING SYSTEM INCLUDING THE PRINT ORDER PROCESSOR, AND NON-TRANSITORY COMPUTER-READABLE STORAGE MEDIUM**

(30) Priority: 24.05.2018 JP 2018099421
(71) Applicant: Roland DG Corporation, Hamamatsu-shi, Shizuoka 431-2103 (JP)
(72) Inventor: OHTA, Takeomi, Hamamatsu-shi, Shizuoka 431-2103 (JP); FUNAKOSHI, Kazutoshi, Hamamatsu-shi, Shizuoka 431-2103 (JP); TOZUKA, Takeshi, Hamamatsu-shi, Shizuoka 431-2103 (JP); TAKAGISHI, Koichiro, Hamamatsu-shi, Shizuoka 431-2103 (JP); HORIUCHI, Hiroki, Hamamatsu-shi, Shizuoka 431-2103 (JP)
(74) Representative: Grünecker Patent- und Rechtsanwälte PartG mbB

(57) **Abstract**

A web catalog generator generates a web catalog including content to be presented on a customer terminal. The web catalog generator includes a memory, an input receiver, and a main generator . The memory stores at least one template file that specifies the content and a presentation position where the content is to be presented. The template file includes at least one template. The input receiver receives content information that is information on the content. The main generator replaces content information already included in the template file with the content information received by the input receiver, and causes the memory to store the template file including the content information received by the input receiver.

## Description

### BACKGROUND OF THE INVENTION

### 1. Field of the Invention

The present invention relates to web catalog generators, print order processors including the web catalog generators, printing systems including the print order processors, and non-transitory computer-readable storage media.

### 2. Description of the Related Art

An apparatus for effecting printing on a substrate using a printer so as to create desired printed matter is known in the related art. JP 2007-136764 A, for example, discloses a printer including a jig (hereinafter referred to as a "holder"), a table, and an ink head. A substrate is disposed on the holder. The holder is placed on the table. The table moves in a sub-scanning direction. The ink head moves in a main scanning direction. The ink head discharges ink onto the substrate.

In recent years, printers, such as one described above, have rapidly found widespread use as, for example, in-store printers installed at retail stores. Business operators, such as mobile phone shops and mass home electronics retailers, are extending their value-added services including immediate and diverse printing services. In providing this type of service, a shop or store (hereinafter referred to as a "user") that receives a print order usually prepares electronic catalog data (hereinafter referred to as a "web catalog") in advance. A customer selects the type of substrate and data of an image to be printed while looking at the web catalog on a customer terminal, for example, and then places an order for original printing. The user prints a desired image on a substrate (such as a mobile phone case, an electronic cigarette, or a photo frame) in response to the order from the customer.

Up to now, web catalogs, such as one described above, have been created in the form of web pages using programming language (s), such as HTML, CSS, and/or JavaScript. Thus, once web catalogs have been created, information presented in the web catalogs (i.e., content of the web catalogs) cannot be easily replaced. This makes it necessary to ask a web page creator to rewrite a web page each time content needs to be changed. Such a process unfortunately increases the cost of rewriting web pages and takes time to reflect changes in web catalogs. Consequently, the demand of users is to change content of web catalogs with more ease.

### SUMMARY OF THE INVENTION

Accordingly, preferred embodiments of the present invention provide web catalog generators to generate web catalogs whose content is easily changeable, print order processors including the web catalog generators, printing systems including the print order processors, and non-transitory computer-readable storage media.

A preferred embodiment of the present invention provides a web catalog generator to generate a web catalog including content to be presented on a customer terminal. The web catalog generator includes a memory, an input receiver, and a main generator. The memory stores at least one template file that specifies the content and a presentation position where the content is to be presented. The template file includes at least one template. The input receiver receives content information that is information on the content. The main generator replaces content information already included in the template file with the content information received by the input receiver, and causes the memory to store the template file including the content information received by the input receiver.

The web catalog generator is able to easily change the details of the web catalog to be presented by replacing the content information included in the template. As used herein, the phrase "to change the details of the web catalog to be presented" may refer to adding or deleting information to or from the web catalog. Thus, if a user is unfamiliar with programming languages, the web catalog generator would enable the user to easily change the details of the web catalog to be presented. The web catalog generator is able to save the cost and trouble of asking a web page creator to change the details of the web catalog to be presented. The web catalog generator is also able to reduce the time required to reflect the changes in the web catalog.

Another preferred embodiment of the present invention provides a print order processor including a web catalog generator and a web catalog display. The web catalog generator generates a web catalog including content. The web catalog display is connected to the web catalog generator so as to enable data communication with the web catalog generator. The web catalog display presents the content of the web catalog. The web catalog generator includes a memory, an input receiver, a main generator, and a transmitter. The memory stores at least one template file that specifies the content and a presentation position where the content is to be presented. The template file includes at least one template. The input receiver receives content information that is information on the content. The main generator replaces content information already included in the template file with the content information received by the input receiver, and causes the memory to store the template file including the content information received by the input receiver. The transmitter transmits the template file. The web catalog display includes a receiver, a presentation data generator, and a display. The receiver receives the template file. The presentation data generator generates presentation data in which the content included in the template is located at the presentation position. The display presents the presentation data. The print order processor enables a customer to smoothly place a print order. Consequently, the print order processor achieves a higher level of customer satisfaction.

Still another preferred embodiment of the present invention provides a printing system including the print order processor, a print manager, and a printer. The print manager is connected to the print order processor so as to enable data communication with the print order processor. The printer is connected to the print manager so as to enable data communication with the print manager. The print order processor further includes an order data generator and a transmitter. The order data generator generates image data of a print order placed by a customer. The transmitter transmits the image data of the print order to the print manager . The print manager includes a memory and a transmitter . The memory stores print setting information necessary to control the printer. The transmitter transmits the image data of the print order and the print setting information to the printer. The printing system enables the user to smoothly perform printing-related operations including receiving a print order and effecting printing on a substrate. Consequently, the printing system is able to enhance operating efficiency and reduce the occurrence of errors during a sequence of operations including an order receiving operation and a printing operation.

Yet another preferred embodiment of the present invention provides a non-transitory computer-readable storage medium that stores a computer program to cause a computer to operate as the web catalog generator.

The web catalog generator according to one preferred embodiment of the present invention is able to change the details of a web catalog to be presented more easily than before . This results in enhanced user convenience. The print order processor according to another preferred embodiment of the present invention enables a customer to smoothly place a print order. The printing system according to still another preferred embodiment of the present invention enables a user to smoothly perform printing-related operations including receiving a print order and effecting printing on a substrate.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a block diagram of a printing system according to a preferred embodiment of the present invention.
FIG. 2 is a front view of a printer according to a preferred embodiment of the present invention.
FIG. 3 is a plan view of a printing area according to a preferred embodiment of the present invention.
FIG. 4 is a partially enlarged view of a carriage according to a preferred embodiment of the present invention.
FIG. 5 is a plan view of a holder in which substrates are held.
FIG. 6 illustrates an example of a screen that presents a template list and a holder list.
FIG. 7 illustrates an example of a template editing screen.
FIG. 8 illustrates an example of a preview screen.
FIG. 9 illustrates an example of a screen that presents content included in a group of templates belonging to a first hierarchical level.
FIG. 10 illustrates an example of a screen that presents content included in a group of templates belonging to a second hierarchical level.
FIG. 11 illustrates an example of a screen that presents content included in a group of templates belonging to a third hierarchical level.
FIG. 12 illustrates an example of a customer confirmation screen.
FIG. 13 illustrates an example of a customer editing screen.
FIG. 14 illustrates an example of a customer final confirmation screen.
FIG. 15 illustrates an example of an order completion screen.

### DETAILED DESCRIPTION OF THE PREFERRED EMBODIMENTS

Preferred embodiments of the present invention will be described below with reference to the drawings. The preferred embodiments described below are naturally not intended to limit the present invention in any way. Components or elements having the same functions are identified by the same reference signs, and description thereof will be simplified or omitted when deemed redundant.

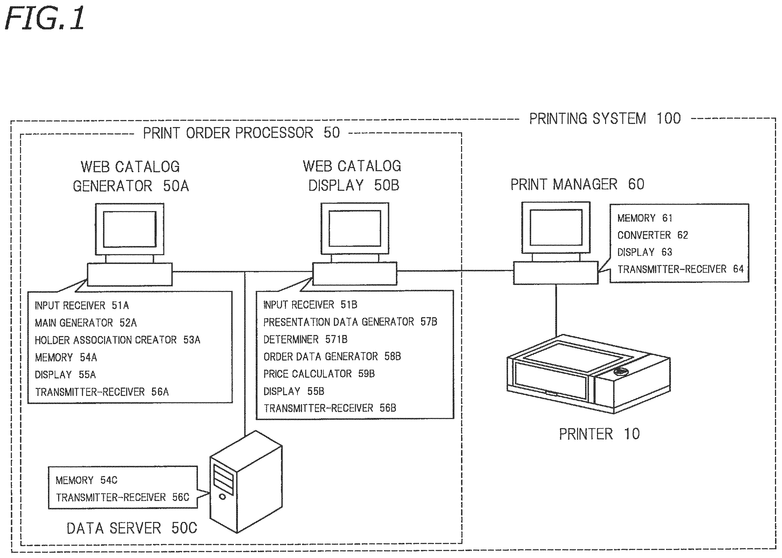

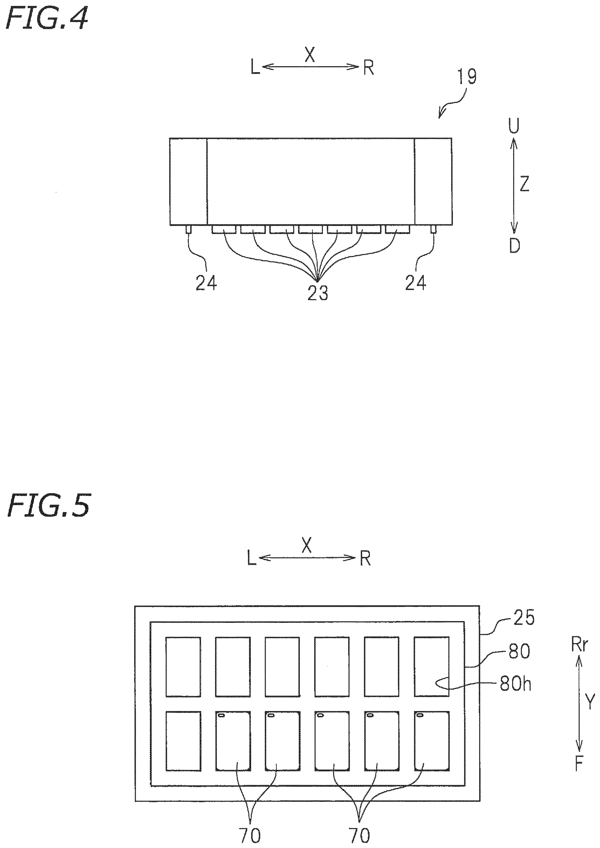

FIG. 1 is a block diagram of a printing system 100. The printing system 100 includes a printer 10, a print order processor 50, and a print manager 60. The print order processor 50 and the print manager 60 are connected to each other so as to enable wired or wireless communication therebetween. The printer 10 and the print manager 60 are connected to each other so as to enable wired or wireless communication therebetween. The printing system 100 receives a print order from a customer using the print order processor 50 and prints image (s) on one substrate 70 or two or more substrates 70 (see FIG. 5) using the printer 10 in accordance with the details of the print order.

The substrates 70 are not limited to any particular type of substrate. Examples of the substrates 70 may include flat sheets (such as printing paper, transfer paper, and cards), various cases (such as mobile phone cases), small electronic devices (such as electronic cigarettes), small articles (such as key rings, photo frames, and signboards), daily necessities, cosmetics, and three-dimensional objects (such as fashion accessories). Examples of materials for the substrates 70 may naturally include paper (such as plain paper and inkjet printing paper). Examples of materials for the substrates 70 may further include resins (such as polyvinyl chloride, acryl resin, polycarbonate, polystyrene, and acrylonitrile butadiene styrene (ABS) copolymer), metals (such as aluminum and stainless steel), carbon, earthenware, ceramics, glass, rubber, and leather.

In the following description, the terms "right", "left", "up", and "down" respectively refer to right, left, up, and down with respect to a user facing the front of the printer 10. A direction from the rear of the printer 10 toward the user is a forward direction. A direction from the user toward the rear of the printer 10 is a rearward direction. The reference signs F, Rr, R, L, U, and D in the drawings respectively represent front, rear, right, left, up, and down. The reference signs X, Y, and Z in the drawings respectively represent a right-left direction, a front-rear direction, and an up-down direction. These directions are defined merely for the sake of convenience of description and do not limit in any way how the printer 10 may be installed.

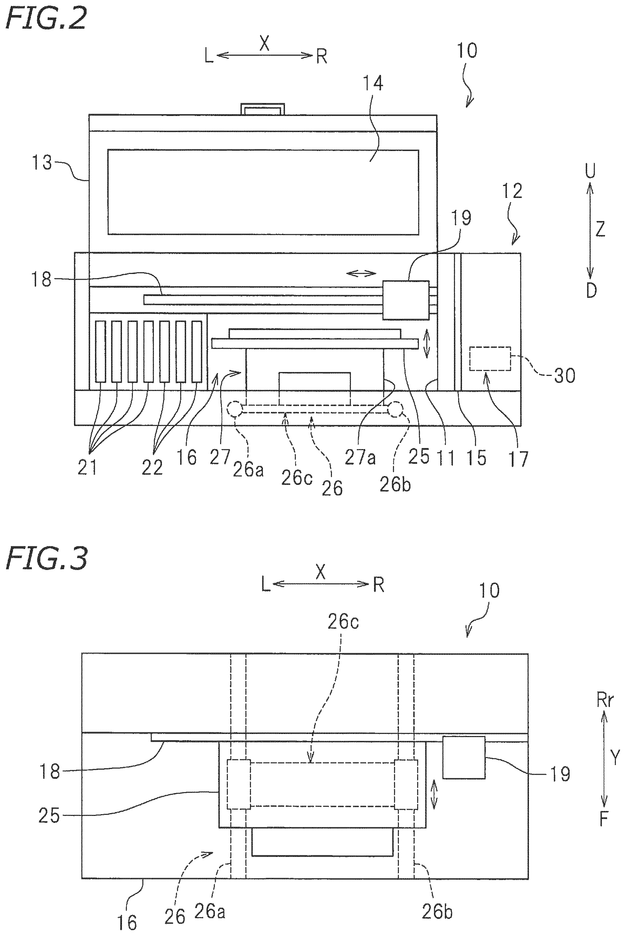

FIG. 2 is a front view of the printer 10. FIG. 3 is a plan view of a printing area 16 in the printer 10. The printer 10 receives print data from the print manager 60 and prints image(s) on the substrate (s) 70 in accordance with the print data. As used herein, the term "image" may refer to a character, a numeral, a sign, a figure, a design, a pattern, or a photograph. In the present preferred embodiment, the printer 10 is a photo-curing inkjet printer (hereinafter simply referred to as a "printer"). As used herein, the term "inkjet printer" refers to any of various printers that use inkjet printing techniques known in the related art. Examples of such inkjet printing techniques include continuous methods (such as a binary deflection method and a continuous deflection method) and various on-demand methods (such as a thermal method and a piezoelectric method).

The printer 10 is a "flatbed" printer. The printer 10 has a box shape. The printer 10 includes a casing 12 and a front cover 13. An opening 11 is defined in the casing 12. The front cover 13 is able to cover and uncover the opening 11. The front cover 13 is supported by the casing 12 such that the front cover 13 is rotatable around its rear end. Rotating the front cover 13 upward around its rear end brings an internal space of the casing 12 into communication with an external space. The front cover 13 is provided with a window 14. The window 14 is made of a transparent material. This would enable the user to check the internal space of the casing 12 through the window 14 if the opening 11 is covered by the front cover 13.

The internal space of the casing 12 is divided into the printing area 16 and a control area 17 by a partition 15. The printing area 16 is a space located leftward of the partition 15. The control area 17 is a space located rightward of the partition 15.

A guide rail 18 is disposed above the printing area 16. The guide rail 18 is secured to the casing 12. The guide rail 18 extends in the right-left direction X. A carriage 19 is slidable along the guide rail 18. The carriage 19 is reciprocated in the right-left direction X along the guide rail 18 by a carriage conveyor (not illustrated).

FIG. 4 is a partially enlarged view of the carriage 19. The carriage 19 includes seven ink heads 23 and two ultraviolet lamps 24. The ink heads 23 discharge ink onto the substrate(s) 70. The ink heads 23 are located side by side in the right-left direction X and disposed in an in-line arrangement. The ink heads 23 are each in communication with an associated one of ink cartridges 21 and 22 through a flexible ink tube (not illustrated).

The ink cartridges 21 and 22 each store ultraviolet curable ink. Ultraviolet curable ink typically contains a polymerizable compound and a polymerization initiator. The ink cartridges 21 each store process color ink (CMYK), such as cyan ink (C), magenta ink (M), yellow ink (Y), or black ink (K). The process color ink is used to form an image. The ink cartridges 22 each store special color ink, such as primer ink, white ink, or coating ink. The ink stored in the ink cartridges 22 differs in, for example, color and/or usage from the process color ink stored in the ink cartridges 21. As used herein, the term "special color ink" refers to any of various types of ink different in color and/or characteristics from process color ink.

Primer ink is pretreatment ink to facilitate fixation of ink on, for example, a highly ink-repellant substrate on which printing is to be affected. Primer ink is used for a preliminary treatment to be performed before other ink is printed on a substrate. Primer ink is typically transparent. White ink is used not only for image formation but also for a preliminary treatment to improve color reproduction of process color ink. Coating ink is surface treatment ink. Coating ink is used for surface finishing to be performed after an image is printed using, for example, process color ink and/or white ink. Coating ink is typically transparent.

In the present preferred embodiment, the number of ink cartridges 21 included in the printer 10 is four, and the number of ink cartridges 22 included in the printer 10 is three. Alternatively, the printer 10 may include any other number of ink cartridges 21, and any other number of ink cartridges 22. The printer 10 may include no ink cartridges 22. The number of ink cartridges 21 may be one, two, three, or five or more, and the number of ink cartridges 22 may be one, two, four, or five or more. The ink cartridges 22 do not necessarily have to store all of primer ink, white ink, and coating ink. In one example, the ink cartridges 22 may store one or two of primer ink, white ink, and coating ink.

The ultraviolet lamps 24 emit ink-curing ultraviolet light onto the substrates 70. One of the ultraviolet lamps 24 is disposed on the right end of the carriage 19 located rightward of the ink heads 23. The other ultraviolet lamp 24 is disposed on the left end of the carriage 19 located leftward of the ink heads 23. The ultraviolet lamps 24 are in alignment with the ink heads 23 in the right-left direction X. The ultraviolet lamps 24 each emit ultraviolet light of a wavelength that is able to cure ink. Although the number of ultraviolet lamps 24 is two in the present preferred embodiment, the number of ultraviolet lamps 24 may be one or three or more.

A table 25 is disposed below the carriage 19. The table 25 is a support to support the substrates 70. The table 25 is movable in the front-rear direction Y by a first table conveyor 26. The table 25 is movable in the up-down direction Z by a second table conveyor 27. The first table conveyor 26 is an example of a conveyor to move the table 25 relative to the ink heads 23 in a scanning direction.

The first table conveyor 26 includes slide rails 26a and 26b, a transferor 26c, and a front-rear movement motor (not illustrated) . The slide rails 26a and 26b extend in the front-rear direction Y. The slide rails 26a and 26b are disposed in parallel or substantially parallel with each other. The transferor 26c is slidable along the slide rails 26a and 26b. The transferor 26c supports the table 25 through a support interposed therebetween such that the table 25 is located above the transferor 26c. The front-rear movement motor is electrically connected to a controller 30 and controlled by the controller 30. Driving the front-rear movement motor moves the transferor 26c along the slide rails 26a and 26b. This moves the table 25 in the front-rear direction Y. The front-rear direction Y includes a first direction in which the table 25 is transferred from the upstream side to the downstream side, and a second direction in which the table 25 is transferred from the downstream side to the upstream side. In the present preferred embodiment, the first direction is the scanning direction.

The second table conveyor 27 includes a height adjuster 27a and an up-down movement motor (not illustrated). The height adjuster 27a is provided on the lower surface of the table 25. The height adjuster 27a is connected to the up-down movement motor. The up-down movement motor is electrically connected to the controller 30 and controlled by the controller 30. Driving the up-down movement motor changes the height of the height adjuster 27a so as to adjust the height of the table 25.

FIG. 5 is a plan view of a holder 80 placed on the table 25. The substrates 70 are disposed on the holder 80. The holder 80 is a jig for positioning of the substrates 70 relative to the printer 10. When printing is performed on the substrates 70 at a time, the holder 80 holds the substrates 70 such that the substrates 70 do not deviate from their intended positions. The outer shape of the holder 80 is not limited to any particular shape. In the present preferred embodiment, the holder 80 has a rectangular shape in a plan view. Although the holder 80 is similar in shape to the table 25 in the plan view, the holder 80 may be different in size from the table 25 or similar in size to the table 25 in the plan view.

The holder 80 is provided with a plurality of holes 80h each conforming to the outer shape of an associated one of the substrates 70. In the present preferred embodiment, the holes 80h are similar in shape and size. Because processing errors may occur, the holes 80h do not necessarily have to be identical in shape and size. The holder 80 may be provided with any number of holes 80h. In the present preferred embodiment, the number of holes 80h of the holder 80 aligned in a row in the right-left direction X is six, and the number of holes 80h of the holder 80 aligned in a row in the front-rear direction Y is two, so that the number of holes 80h is 12 in total, for example. Alternatively, the holder 80 may be provided with one hole 80h. Although the shape of each hole 80h is not limited to any particular shape, the holes 80h each have a rectangular shape in the plan view in the present preferred embodiment. Alternatively, the holes 80h may each have a polygonal shape (such as a triangular shape or a square shape), a circular shape, or a star shape. In the present preferred embodiment, the holes 80h are through holes passing through the holder 80 in the up-down direction Z. In an alternative example, the holes 80h may be holes in the form of recesses defined by cutting out upper portions of the holder 80. In another alternative example, the holes 80h may be defined by a frame partially protruding from the holder 80 having a flat plate shape. In still another alternative example, the holes 80h may be defined by, for example, lines and/or figures drawn on the surface of the holder 80 having a flat plate shape.

In the present preferred embodiment, the number of substrates 70 disposed on the holder 80 is five, and the five substrates 70 are similar in type and size, for example. Although the substrates 70 disposed in the holes 80h are not limited to any particular shape or size, the substrates 70 are similar in shape and size to the holes 80h in the present preferred embodiment. The substrates 70 disposed in the holes 80h, however, may be smaller in size than the holes 80h. The substrates 70 disposed in the holes 80h may be different in shape from the holes 80h.

The controller 30 is provided in the control area 17. The controller 30 controls operations of the printer 10 in accordance with print data transmitted from the print manager 60. The controller 30 is communicably connected to a carriage motor of the carriage conveyor, the front-rear movement motor of the first table conveyor 26, and the up-down movement motor of the second table conveyor 27 so as to control the positions of the substrates 70 and the ink heads 23 relative to each other. The controller 30 is communicably connected to the ink heads 23 so as to control discharge of ink onto the substrates 70. The controller 30 is communicably connected to the ultraviolet lamps 24 so as to control activation and deactivation of the ultraviolet lamps 24.

The controller 30 is typically a computer. In one example, the controller 30 includes an interface (I/F), a central processing unit (CPU), a read-only memory (ROM), a random-access memory (RAM), and a storage device (such as a memory) . The I/F receives print data transmitted from the print manager 60. The CPU executes a command of a control program. The ROM stores the program to be executed by the CPU. The RAM is used as a working area where the program is to be expanded. The storage device stores the program and various data.

The print order processor 50 is able to receive a print order from a customer who uses a web catalog prepared in advance by the user. The print order processor 50 includes a web catalog generator 50A, a web catalog display 50B, and a data server 50C. The web catalog generator 50A, the web catalog display 50B, and the data server 50C are able to communicate with each other so as to transmit and receive data to and from each other through a network, such as the Internet or intranet.

The web catalog generator 50A is able to generate data (or information) of the web catalog to be presented on the web catalog display 50B. In the present preferred embodiment, the web catalog generator 50A includes an input receiver 51A, a main generator 52A, a holder association creator 53A, a memory 54A, a display 55A, and a transmitter-receiver 56A. The web catalog display 50B is able to present content included in the web catalog generated by the web catalog generator 50A. The web catalog display 50B is thus able to provide the content to the customer. In the present preferred embodiment, the web catalog display 50B also functions as a print order receiver to be used when the customer places a print order. In the present preferred embodiment, the web catalog display 50B includes an input receiver 51B, a presentation data generator 57B, a determiner 571B, an order data generator 58B, a price calculator 59B, a display 55B, and a transmitter-receiver 56B. The data server 50C includes a memory 54C and a transmitter-receiver 56C. The web catalog generator 50A, the web catalog display 50B, and the data server 50C illustrated in the present preferred embodiment are separate from each other. Alternatively, any two or all of the web catalog generator 50A, the web catalog display 50B, and the data server 50C may be integral with each other.

In one example, web catalog data is created using source code written in programing language(s), such as HTML, CSS, and/or JavaScript. In the present preferred embodiment, web catalog data includes a plurality of template files. Each template file includes at least one template. Each template file specifies information on content (hereinafter referred to as "content information") to be presented on the display 55B, and a presentation position where the content is to be presented (i.e., a layout of the content) on the display 55B. In one example, content includes textual information and/or graphic data. From the viewpoint of increasing customer convenience and visibility, each template preferably includes graphic data (such as a photograph and/or a design) in the form of content. Each template file is given a suitable name (or file name) such that each template file is identifiable by the user. Including such template files in a web catalog enables the user to easily edit content information included in each template without any concern for programming languages.

In the present preferred embodiment, hierarchical levels are assigned to the templates in accordance with the order in which the templates are to be presented on the display 55B. The template files are thus presented in a hierarchical form on the display 55B. In other words, the template files have a hierarchical structure (i.e., a tree form) reflective of the order in which the template files are to be presented on the display 55B. A specific example of such a hierarchical structure includes a first hierarchical level group, a second hierarchical level group, and a third hierarchical level group. The first hierarchical level group includes "category" templates related to themes (or scenes) of seasonal functions and/or events, for example. The second hierarchical level group includes "sub-category" templates related to the types of the substrates 70. The third hierarchical level group includes "product" templates related to print order formats prepared in advance. Because the user may define any hierarchical structure, a hierarchical structure to be defined by the user is not limited to the specific example. Although the hierarchical structure in the specific example has three levels, a hierarchical structure to be defined by the user may have two levels or four or more levels.

Each of the web catalog generator 50A and the web catalog display 50B is typically a computer. Similarly to the above-described controller 30, for example, the web catalog generator 50A and the web catalog display 50B each include an I/F, a CPU, a ROM, a RAM, and a memory. Each of the web catalog generator 50A and the web catalog display 50B may be a desktop personal computer or a portable terminal (such as a notebook personal computer, a tablet terminal, or a smartphone).

The web catalog generator 50A and the web catalog display 50B may be computer program (s) to cause a CPU of a computer to operate as the web catalog generator 50A and/or the web catalog display 50B independent of each other. The computer program(s) in which operations of the web catalog generator 50A and/or the web catalog display 50B are written may be stored in a non-transitory computer-readable storage medium. Examples of the non-transitory computer-readable storage medium include: semiconductor storage media, such as a ROM and a nonvolatile memory card; optical storage media, such as a digital versatile disc (DVD), a magneto-optical (MO) disc, a minidisc (MD), a compact disc (CD), and a Blu-ray disc (BD); and magnetic storage media, such as a magnetic tape and a flexible disk. The computer program(s) may be transmitted to a server computer through any of the storage media just mentioned or a network (such as the Internet or intranet) . In this case, the server computer functions as part of the web catalog generator 50A and/or the web catalog display 50B.

The web catalog generator 50A is a user terminal installed, for example, at a store's office. The components of the web catalog generator 50A (i.e., the input receiver 51A, the main generator 52A, the holder association creator 53A, the memory 54A, the display 55A, and the transmitter-receiver 56A) are able to communicate with each other. The functions of the components of the web catalog generator 50A may be implemented by software or hardware. The functions of the components of the web catalog generator 50A may be performed by processor(s) or may be incorporated into circuit(s).

The input receiver 51A is an interface for a store (or user) that receives a print order from a customer. In one example, the input receiver 51A is an interface with a clerk at a retail store who actually carries out a printing operation. The input receiver 51A receives, from the user, information necessary for web catalog creation (e.g., content information in each template). The input receiver 51A includes an input device or input devices (not illustrated), such as a keyboard (which includes cursor keys and/or numeric input keys), a pointing device (e.g., a mouse), and/or button(s). This allows the user to manually enter information into the web catalog generator 50A. The input receiver 51A may be able to allow the user to obtain necessary information through an external device (such as a host computer) and/or a network connected to the input receiver 51A in a wired or wireless manner.

The main generator 52A is able to generate template files to be included in a web catalog. The main generator 52A is able to present a list of templates on the display 55A, add a new template file, and delete an unnecessary template file. A newly created template file is stored in the memory 54A. The main generator 52A is able to present, on the display 55A, a screen to edit the existing templates. This enables the user to freely change content information included in each template file in accordance with, for example, customer's needs, a seasonal function, and/or an event. The types of editable content are determined in advance. In one example, the user enters content information into the web catalog generator 50A through the input receiver 51A. The content information entered replaces content information already included in the template(s), so that the content information entered is included in the template file(s). The template file(s) whose content information has been replaced with the content information entered is/are stored in the memory 54A. In the present preferred embodiment, the functions of the main generator 52A are implemented by a native application. Alternatively, the functions of the main generator 52A may be implemented by a web application. In this case, the web catalog generator 50A does not necessarily have to include the memory 54A.

The holder association creator 53A is able to create association information that creates associations between the template files and the holders 80. In one example, the holder association creator 53A is able to present, on the display 55A, both of the template files and information on the holders 80 (hereinafter referred to as "holder information") usable for printing to be performed on the substrates 70. This enables the user to freely associate the template files with the holder information. Creating associations between the templates and the holders 80 at the time of web catalog creation allows the user to thoroughly prepare the necessary holder(s) 80 before receiving a print order from the customer. A mix-up of the holders 80 is thus unlikely to occur at the time of printing. This enhances the convenience of the user. In one example, the holder information is stored in the memory 54C of the data server 50C. The holder information stored in the memory 54C is transmitted to the web catalog generator 50A and received by the transmitter-receiver 56A. The association information that associates the template files with the holders 80 is transmitted from the transmitter-receiver 56A to the data server 50C and stored in the memory 54C. In the present preferred embodiment, the functions of the holder association creator 53A are implemented by a web application. Alternatively, the functions of the holder association creator 53A may be implemented by a native application. Because the holder association creator 53A is not essential, the web catalog generator 50A does not necessarily have to include the holder association creator 53A when, for example, only one type of the holders 80 is used or no holder 80 is used.

The memory 54A typically temporarily stores one or a plurality of template files generated or modified by the main generator 52A. The template file(s) stored in the memory 54A is/are transmitted from the transmitter-receiver 56A to the data server 50C and stored in the memory 54C. The memory 54A may further store the holder information and the association information that associates the templates with the holders 80. The web catalog generator 50A does not necessarily have to include the memory 54A. In one example, the memory 54C of the data server 50C may also serve as the memory 54A.

The display 55A presents the information stored in the memory 54A and the memory 54C, such that the information is visible to the user. The display 55A presents, for example, a web application screen and/or a native application screen for web catalog creation. The display 55A may also have the function of presenting a preview screen to check information to be presented on the display 55B. In one example, the display 55A includes a single display or a plurality of displays. The display 55A may also serve as an input device of the input receiver 51A. The display 55A may be a touch screen directly touchable and operable by the user.

In the present preferred embodiment, the transmitter-receiver 56A is an interface with the data server 50C. In one example, the transmitter-receiver 56A transmits and receives information (such as the template files, the holder information, and the association information associating the templates with the holders 80) to and from the data server 50C. When a web application is used, the transmitter-receiver 56A is constantly connected through a network to the data server 50C. When a native application is used, the transmitter-receiver 56A may be constantly connected through a network to the data server 50C or may be intermittently connected through a network to the data server 50C when necessary.

The web catalog display 50B is a customer terminal installed, for example, at a retail store. The web catalog display 50B presents a web catalog on the display 55B so as to guide the customer through the process of placing a print order. In the present preferred embodiment, the templates included in the web catalog are presented in a hierarchical form on the display 55B. The customer is thus able to place a desired print order by sequentially entering his or her requests while following the information presented in a hierarchical form on the display 55B. This enables the customer to smoothly place a print order, resulting in enhanced customer convenience. The web catalog display 50B automatically receives an order, making it unnecessary for the user to enter the details of the order. This enhances the efficiency of order-taking operations, prevents or reduces errors in data entry, and increases user convenience.

The components of the web catalog display 50B (i.e., the input receiver 51B, the presentation data generator 57B, the determiner 571B, the order data generator 58B, the price calculator 59B, the display 55B, and the transmitter-receiver 56B) are able to communicate with each other. The functions of the components of the web catalog display 50B may be implemented by software or hardware. The functions of the components of the web catalog display 50B may be performed by processor(s) or may be incorporated into circuit (s) .

The input receiver 51B is an interface with the customer who places a print order. The input receiver 51B receives, from the customer, information necessary to place a print order. Similarly to the input receiver 51A, the input receiver 51B includes an input device or input devices (not illustrated), such as a keyboard, a pointing device (e.g., a mouse), and/or button (s). This allows the customer to manually enter information into the web catalog display 50B. The input receiver 51B may be able to allow the customer to obtain necessary information through an external device (such as a host computer) and/or a network connected to the input receiver 51B in a wired or wireless manner.

The presentation data generator 57B generates web catalog presentation data and presents the data on the display 55B. In response to a print order-related operation by the customer, the presentation data generator 57B makes reference to the template file (s) stored in the memory 54C of the data server 50C, and generates presentation data in which content included in the template(s) is located at predetermined presentation position(s). In the present preferred embodiment, the presentation data generator 57B generates presentation data for each hierarchical level. In one example, the presentation data generator 57B generates, for each hierarchical level, presentation data in which pieces of content to be presented are arranged. One specific example first involves dividing the display 55B into a plurality of areas and then involves generating, for each of the areas, presentation data in which pieces of content included in the templates belonging to the same hierarchical level are arranged. In the present preferred embodiment, the functions of the presentation data generator 57B are implemented by a web application. Alternatively, the functions of the presentation data generator 57B may be implemented by a native application. In this case, the web catalog display 50B may include a memory separate from the memory 54C.

In the present preferred embodiment, the presentation data generator 57B includes the determiner 571B. When the presentation data generator 57B generates the presentation data, the determiner 571B selects, from among a plurality of template files, template file (s) to be used for web catalog creation in accordance with whether the template file(s) meet(s) a predetermined criterion. In other words, the determiner 571B decides which content is to be presented on the display 55B in accordance with whether the content meets a predetermined criterion. In one example, the determiner 571B decides template file(s) to be used for web catalog creation in accordance with the association information associating the templates with the holders 80. Specifically, the determiner 571B selects only template (s) associated with the predetermined holder (s) 80 and presents, on the display 55B, content included in the template (s) selected. In other words, the determiner 571B does not select template (s) that is/are not associated with the predetermined holder(s) 80, and does not present, on the display 55B, content included in the template (s) unselected. Thus, only template file (s) to be used to carry out a print order, for example, is/are selectively presentable on the display 55B.

In another example, the determiner 571B determines that template file(s) having no association whatsoever with any of the holders 80 is/are unusable template file (s) and that content included in the unusable template file (s) is not to be presented on the display 55B. The holder information implicitly includes information on the substrates 70 (such as types, shapes, and sizes of the substrates 70). For example, suppose that the substrate(s) 70 to be held in the predetermined holder 80 is/are out of stock, making it difficult to carry out a print order. In this case, the user may cancel the association between the predetermined holder 80 and related template file(s) so as to stop receiving print orders for the substrate(s) 70 out of stock. Because the determiner 571B is not essential, the presentation data generator 57B does not necessarily have to include the determiner 571B.

The order data generator 58B presents a predetermined screen on the display 55B so as to enable the customer to freely customize designs on the basis of a print order format prepared in advance in a web catalog, for example. The order data generator 58B includes, for example, drawing software. When the customer enters character(s) and/or draws figure(s) using the input receiver 51B, the order data generator 58B generates drawing data responsive to the character(s) and/or figure(s). The drawing data generated by the order data generator 58B is added to the print order format. The order data generator 58B thus generates image data (hereinafter referred to as "order data") responsive to a final print order from the customer. The order data generated is transmitted from the transmitter-receiver 56B to the data server 50C and stored in the memory 54C. In the present preferred embodiment, the functions of the order data generator 58B are implemented by a web application. Alternatively, the functions of the order data generator 58B may be implemented by a native application. In this case, the web catalog display 50B may include a memory separate from the memory 54C.

The price calculator 59B calculates an estimated price and a final price for a print order from the customer and presents the prices on the display 55B. The price calculator 59B calculates an estimated price in accordance with, for example, a template type belonging to the lowermost hierarchical level (i.e., a print order format selected by the customer) . A fee for each print order format is set in advance by the user, for example. The price calculator 59B calculates, for example, a fixed fee responsive to the print order format selected by the customer and presents the fixed fee as an estimated price on the display 55B.

In one example, the price calculator 59B calculates the product of an estimated price per unit print order and a print quantity specified by the customer, and defines this product as a final price. In another example, the price calculator 59B calculates, for example, the sum of a fee for the print order format (i.e., a basic fee) and a fee for drawing data added by the order data generator 58B (i.e., an option fee), and then calculates the product of this sum and a print quantity so as to define this product as a final price . A price for drawing data is decided using a predetermined database in accordance with, for example, information related to the type of ink to be used for printing and the area of printing. In one example, a price for drawing data is decided in accordance with the amount and unit cost of special color ink to be used for printing. For example, suppose that special color ink is used for printing. In this case, the price calculator 59B calculates the sum of a price for drawing data when no special color ink is used and the unit cost of special color ink to be used, and defines this sum as a price for drawing data when special color ink is used for printing. In another example, when the area of printing exceeds a predetermined threshold value, a price for drawing data calculated by the price calculator 59B changes in response to a difference between the area of printing and the threshold value.

When the customer places a print order, the display 55B presents web catalog content. The display 55B may also have the function of presenting an order screen through which the customer places a print order. In the present preferred embodiment, the display 55B presents content included in one or a plurality of templates for each of a first hierarchical level, a second hierarchical level, and a third hierarchical level. The display 55B presents a single or a plurality of print order templates, for example, on a screen for the third hierarchical level. The display 55B presents an editing screen through which the customer customizes image designs. The display 55B presents a print order confirmation screen. Similarly to the display 55A, the display 55B includes, for example, a single display or a plurality of displays. The display 55B may also serve as an input device of the input receiver 51B. The display 55B may be a touch screen directly touchable and operable by the customer.

In the present preferred embodiment, the transmitter-receiver 56B is an interface with the data server 50C and the print manager 60. The transmitter-receiver 56B receives, for example, the template files, the association information associating the templates with the holders 80, and information necessary to calculate print order prices from the data server 50C. The transmitter-receiver 56B transmits, for example, customer order data (which is provided by adding drawing data to a print order format) and print order price information to the data server 50C. The transmitter-receiver 56B transmits, for example, the order data and the association information (which associates the templates with the holders 80) to the print manager 60. The web catalog display 50B, the data server 50C, and the print manager 60 may be constantly connected to each other through a network or may be intermittently connected to each other through a network when necessary.

The data server 50C includes the memory 54C. The memory 54C stores, for example, the holder information, the template files, the association information (which associates the templates with the holders 80), the information necessary to calculate print order prices, the order data (which is provided by adding drawing data to a print order format), and the print order price information. The holder information includes, for example, the number, positions, shapes, and sizes of the holes 80h in which the substrates 70 are to be disposed. The size of each hole 80h includes, for example, the length of each hole 80h in the right-left direction X, the length of each hole 80h in the front-rear direction Y, and the length of each hole 80h in the up-down direction Z. The holder information may be obtained from the print manager 60 through a network, such as the Internet or intranet. Alternatively, the holder information may be obtained from, for example, electronic drawings of the holders 80. The user may access, for example, a homepage prepared by a manufacturer, download default (or temporary) template(s) uploaded to the homepage, and store the template(s) in the memory 54C so as to use the template(s) on an as-needed basis.

The information stored in the memory 54C is transmitted to the web catalog generator 50A and/or the web catalog display 50B from the transmitter-receiver 56C when necessary. In one example, the template files, the association information associating the templates with the holders 80, and the information necessary to calculate print order prices are transmitted, when necessary, to the web catalog display 50B and used when the display 55B presents web catalog content. In the present preferred embodiment, the data server 50C is an external device connected to the web catalog generator 50A and the web catalog display 50B. Alternatively, the data server 50C may be incorporated into, for example, the memory 54A of the web catalog generator 50A and/or a memory (not illustrated) of the web catalog display 50B.

The following description discusses how the user generates a web catalog while looking at screens presented on the display 55A. In the present preferred embodiment, template files and files of the holders 80 are stored in advance in the memory 54C of the data server 50C under default conditions. Content, such as textual information indicative of titles, is temporarily included in advance in the template files such that the template files are distinguishable from each other. The web catalog generating method according to the present preferred embodiment includes a first step in which the user accesses a predetermined web address. Upon receiving an instruction from the user, the main generator 52A presents a template list on the display 55A. In the present preferred embodiment, the main generator 52A presents not only the template list but also a list of the holders 80 on the display 55A.

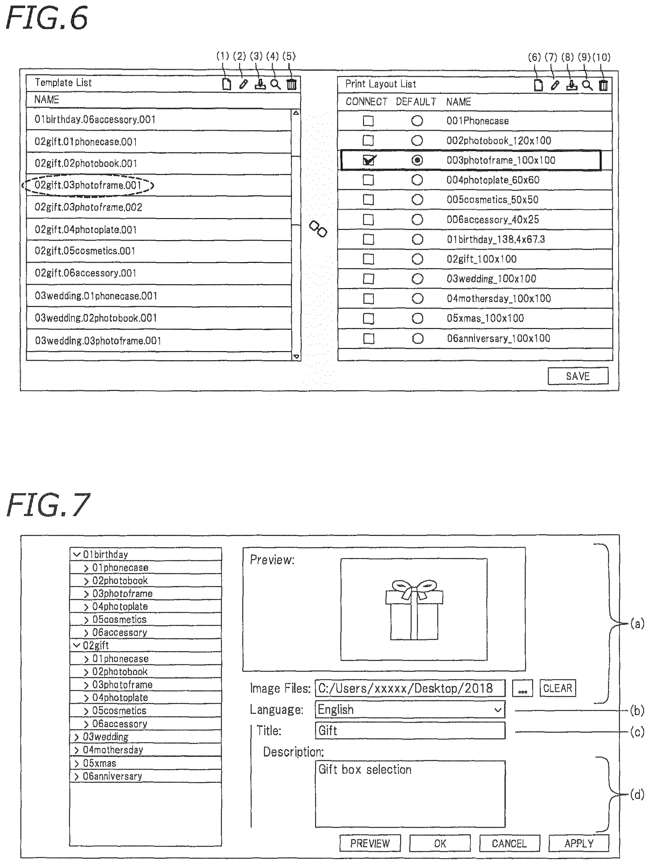

FIG. 6 is an example of a screen that presents the template list and the holder list. The left portion of the screen in FIG. 6 presents the list in which the template files are listed in the predetermined order of file names. This list is represented as "Template List" in FIG. 6. The right portion of the screen in FIG. 6 presents the list in which the files of the holders 80 are listed in the predetermined order of file names. This list is represented as "Print Layout List") in FIG. 6. In one example, the screen in FIG. 6 is used to decide whether web catalog template(s) is/are to be presented and/or decide presentation position(s) where content included in the template (s) is to be presented. The screen in FIG. 6 is a web application running on a server on the Internet or intranet. Information is thus input and output on a browser through a network.

In the present preferred embodiment, the file names of the templates include hierarchical level information based on the order of presentation on the display 55B, and information on the presentation positions where content is to be presented on the display 55B. Specifically, the file name of each template includes a hierarchical level title expressed in alphabets and set off by a dot. Sequential positive real numbers starting with "01" and corresponding to the presentation positions where content is to be presented on the display 55B are assigned to the beginnings of the hierarchical level titles. The template file circled with the broken line in FIG. 6, for example, is saved under the file name of "02gift.03photoframe.001". The file name of this template file includes a first hierarchical level title indicative of a theme (or scene), a second hierarchical level title indicative of the type of the substrate (s) 70, and a third hierarchical level title indicative of a print order format. The first hierarchical level title is a gift represented as "Gift". The second hierarchical level title is a photo frame represented as "Photo Frame". The third hierarchical level title is a print order format represented as "001" . The number "02" in the file name "02gift.03photoframe.001" indicates the presentation position where content is to be presented at the first hierarchical level. The number "03" in the file name "02gift.03photoframe.001" indicates the presentation position where content is to be presented at the second hierarchical level. Including these pieces of information in the template file names enables the user to easily recognize the hierarchical structure of the templates, the correlation between the templates, and the presentation positions where content is to be presented in a web catalog.

Buttons (1) to (5) are arranged side by side above the list "Template List" on the left portion of the screen in FIG. 6. The user is able to add a new template file to the list "Template List" by clicking the button (1). The user is able to select any desired template file from the list "Template List" so as to change content information included in the template or the file name of the template by clicking the button (2). The user is able to download template file(s) by clicking the button (3). The user is able to search the list "Template List" for any desired template file by clicking the button (4). The user is able to delete any desired template file from the list "Template List" by clicking the button (5). When the button (2) on the screen in FIG. 6 is clicked, with any desired template file selected by the user, the main generator 52A changes the screen presented on the display 55A to a template editing screen.

FIG. 7 illustrates an example of the template editing screen. Through this screen, the user edits and/or customizes content information included in the templates. This screen is a native application running on a CPU, for example. The content is thus edited in the web catalog generator 50A. The left portion of the screen in FIG. 7 presents a template file hierarchical structure in a tree form such that the hierarchical structure is easily visually recognizable by the user. The right portion of the screen in FIG. 7 presents the content information included in the template files. The content included in the template files according to the present preferred embodiment includes (a) information on graphic data, (b) information on presentation languages, (c) information on titles, and (d) information on product description. Examples of the information (d) include descriptions of graphic data image, and information on the types, sizes, and appearances of the substrates 70 (such as colors and materials of the substrates 70).

In one example, the user is able to add graphic data to the template(s), replace graphic data of the template(s), and/or delete graphic data from the template(s) on the screen in FIG. 7. In the present preferred embodiment, a pull-down menu is presented by clicking the down arrow "v" next to the presentation language represented as "Language". The pull-down menu includes a single or a plurality of preset usable languages. The user is able to change the presentation language by selecting a desired language from the pull-down menu. The user is able to add, modify, and/or delete textual information (such as titles and/or product description included in the template files) for each presentation language.

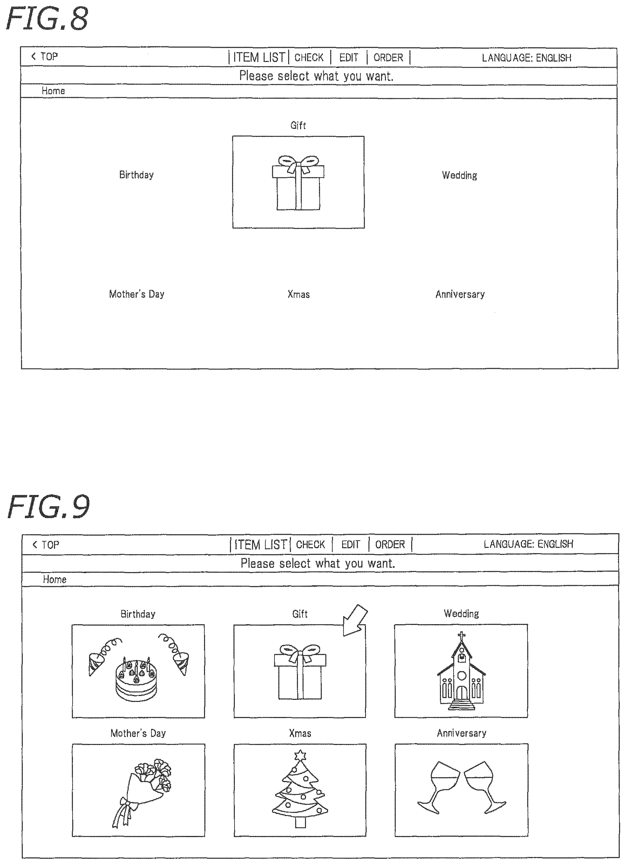

In the course of editing the template, the user clicks a "PREVIEW" button in the lower area of the screen in FIG. 7. The user is thus able to preliminarily check, on the display 55A, the screen to be presented on the display 55B. In one example, the user clicks the "PREVIEW" button, with a saving location (i.e., a file path) for graphic data entered as illustrated in FIG. 7. As illustrated in a preview screen in FIG. 8, the user is thus able to additionally present, on the display 55B, graphics in addition to textual information temporarily entered in advance. Upon finishing the process of editing the template, the user clicks an "APPLY" button presented in the lower area of the screen in FIG. 7. Latest pieces of content information included in the template are thus linked to each other and stored in the memory 54A in the form of a single template file. In response to this, the main generator 52A returns the screen presented on the display 55A to the screen illustrated in FIG. 6.

Upon finishing the process of editing the list "Template List", the user clicks a "SAVE" button presented in the lower area of the screen in FIG. 6. Latest template file information is thus transmitted from the transmitter-receiver 56A to the data server 50C and stored in the memory 54C.

The web catalog generating method according to the present preferred embodiment includes a second step in which information on one or a plurality of the holders 80 is associated with each template file on the screen in FIG. 6 so as to create association information. The list "Print Layout List" presented on the screen in FIG. 6 includes items "CONNECT", "DEFAULT", and "NAME" presented side by side. The item "CONNECT" indicates whether each template file is associated with any of the holders 80. The item "DEFAULT" indicates the predetermined highest-priority holder 80. The item "NAME" indicates the file name of each holder 80. The user may freely define the items "CONNECT" and "DEFAULT" for each template file.

In associating the holder information with template file(s), the user first selects one or a plurality of template files from the list "Template List". The user then selects, from among the holders 80 in the list "Print Layout List", one or a plurality of holders 80 with which the template file (s) is/are to be associated, and puts check mark(s) on the item "CONNECT". In other words, the user removes check mark (s) on the item "CONNECT" for one or a plurality of holders 80 that is/are not to be associated with the template file(s). In one example, the user may remove, for predetermined template file(s), check marks on the item "CONNECT" for all of the holders 80. Making change (s) to the item "CONNECT" and clicking the "SAVE" button in the lower area of the screen in FIG. 6 causes the holder association creator 53A to create association information that associates the template (s) with the holder (s) 80. The association information created is transmitted from the transmitter-receiver 56A to the data server 50C and stored in the memory 54C. The determiner 571B of the web catalog display 50B makes reference to the association information associating the template (s) with the holder(s) 80.

Buttons (6) to (10) are arranged side by side above the list "Print Layout List" on the right portion of the screen in FIG. 6. The user is able to add new holder information to the list "Print Layout List" by clicking the button (6). The user is able to select any desired holder 80 from the list "Print Layout List" so as to change the holder information and/or the file name of the holder 80 by clicking the button (7). The user is able to download holder information by clicking the button (8). The user is able to search the list "Print Layout List" for any desired holder 80 by clicking the button (9). The user is able to delete any desired holder 80 from the list "Print Layout List" by clicking the button (10). The holder information is transmitted from the transmitter-receiver 56A to the data server 50C and stored in the memory 54C.

The user is thus able to generate a web catalog that includes, in addition to the template files, the association information associating the templates with the holders 80.

The following description discusses how the customer places an original print order while looking at a web catalog presented on the display 55B. In the present preferred embodiment, a predetermined top screen (not illustrated) is presented on the display 55B when the web catalog display 50B is on standby. As used herein, the term "standby" refers to a state where the power of the web catalog display 50B is ON but the customer has not yet started the process of placing a print order. The top screen presents a "START" button. The "START" button is used when the customer starts the process of placing a print order so as to move on to a web catalog. In the present preferred embodiment, a click on the "START" button by the customer transmits a signal to the determiner 571B. Upon receiving the signal, the determiner 571B automatically selects, from among the template files stored in the memory 54C, one or a plurality of template files to be used for web catalog creation. The template file(s) selected is/are transmitted from the transmitter-receiver 56C to the web catalog display 50B and received by the transmitter-receiver 56B. The presentation data generator 57B automatically presents, at a predetermined presentation position on the display 55B, content included in each template in a predetermined hierarchical form.

FIG. 9 illustrates an example of a screen that presents content included in a first hierarchical level group of templates. In this example, the theme (or scene)-related first hierarchical level group includes a total of six template files. The template files include content, such as textual information indicative of titles and graphics. The first hierarchical level screen in FIG. 9 presents titles, such as "Birthday", "Gift", "Wedding", "Mother's Day", "Xmas", and "Anniversary", and image designs indicative of the titles. The upper right end of the screen in FIG. 9 presents a "LANGUAGE" button so as to allow the customer to change the presentation language when necessary. The upper central portion of the screen in FIG. 9 presents a check list including "ITEM LIST", "CHECK", "EDIT", and "ORDER" buttons such that the customer easily understands steps to be followed until the customer finishes placing his or her print order. The screen in FIG. 9 presents information that indicates actions to be taken by the customer. Upon a click on the design "Gift" (see the arrow in FIG. 9) by the customer, for example, the presentation data generator 57B changes the screen on the display 55B from the first hierarchical level screen to a second hierarchical level screen.

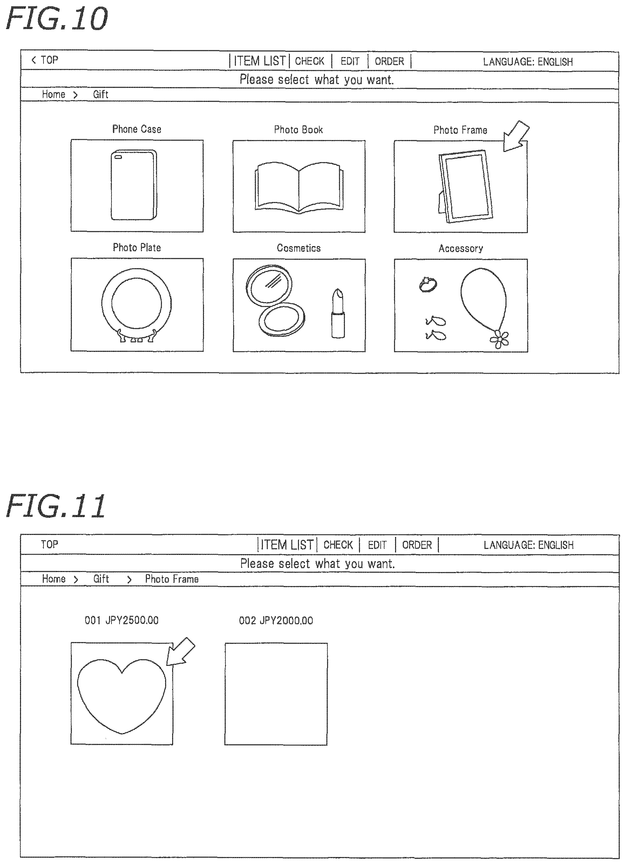

FIG. 10 illustrates an example of a screen that presents content included in a second hierarchical level group of templates. In this example, the second hierarchical level group related to the types of the substrates 70 includes a total of six template files (i.e., "Phone Case", "Photo Book", "Photo Frame", "Photo Plate", "Cosmetics", and "Accessory"). Similarly to the template files of the first hierarchical level, the template files of the second hierarchical level include content, such as textual information indicative of titles and graphics. The second hierarchical level screen in FIG. 10 thus presents titles and image designs indicative of the titles. Upon a click on the design "Photo Frame" (see the arrow in FIG. 10) by the customer, for example, the presentation data generator 57B changes the screen presented on the display 55B from the second hierarchical level screen to a third hierarchical level screen.

FIG. 11 illustrates an example of a screen that presents content included in a third hierarchical level group of templates. The screen in FIG. 11 is a screen for the lowermost hierarchical level of the web catalog. In this example, the third hierarchical level group indicative of print order formats includes a total of two template files. Similarly to the template files of the first hierarchical level, the template files of the third hierarchical level include content, such as textual information indicative of titles and graphics. The third hierarchical level screen in FIG. 11 thus presents titles and image designs indicative of the titles. Graphic data on the right portion of the screen in FIG. 11 is blank data including no image or design. The price calculator 59B presents an estimated price next to each title on the third hierarchical level screen in FIG. 11. Presenting an estimated price on the screen for the lowermost hierarchical level of the web catalog enables the customer to check whether the price meets his or her budget at an early stage in the process of placing a print order. Upon a click on the design "001" on the left portion of the screen (see the arrow in FIG. 11) by the customer, for example, the presentation data generator 57B changes the screen presented on the display 55B to a confirmation screen to confirm the details of the print order format selected.

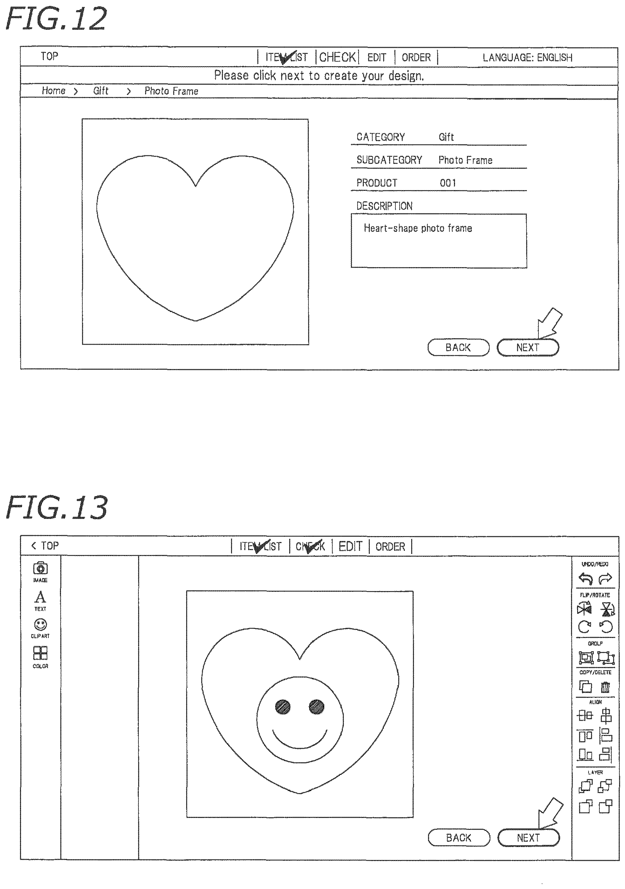

FIG. 12 illustrates an example of the confirmation screen for the customer. The screen in FIG. 12 presents content, such as an image included in the print order format selected, the title of a category (belonging to the first hierarchical level), the title of a sub-category (belonging to the second hierarchical level), the title of a product (belonging to the third hierarchical level), and a product description. This screen enables the customer to check the details of the format selected. The customer is also able to check a product description box so as to determine whether the product meets his or her desires. Upon a click on a "BACK" button in the lower area of the screen in FIG. 12 by the customer, the screen on the display 55B returns to the immediately preceding screen (i.e., the third hierarchical level screen) . Upon a click on a "NEXT" button (see the arrow in FIG. 12) by the customer, the presentation data generator 57B changes the screen on the display 55B to an editing screen.

FIG. 13 illustrates an example of the editing screen for the customer. The screen in FIG. 13 presents, for example, icons for drawing tools. The icons are arranged on the rightmost and leftmost portions of the screen in FIG. 13. The central portion of the screen in FIG. 13 is, for example, a drawing area where the customer is able to freely create character(s) and/or figure(s) and add the character(s) and/or figure(s) to image(s) included in the print order format. Through the screen in FIG. 13, the customer is able to update desired graphic data (such as a photograph and/or a design) by selecting, for example, an "IMAGE" icon and/or a "CLIPART" icon and to enter textual information by selecting a "TEXT" icon. In one example, when the substrate 70 is to be cut by a cutter after a print order is placed, a cutting line may be placed around an image presented on the display 55B. In another example, when hot stamping is performed using a hot stamping device or engraving is performed using a marking press and/or an engraving machine after a print order is placed, a mark may be placed on a reference position for hot stamping or engraving. Editing the print order format on the editing screen by the customer causes the order data generator 58B to generate drawing data and order data in accordance with the print order format edited. Upon a click on a "BACK" button in the lower area of the screen in FIG. 13 by the customer, the screen on the display 55B returns to the immediately preceding screen (i.e., the confirmation screen). Upon a click on a "NEXT" button (see the arrow in FIG. 13) by the customer, the presentation data generator 57B changes the screen on the display 55B to a final confirmation screen.

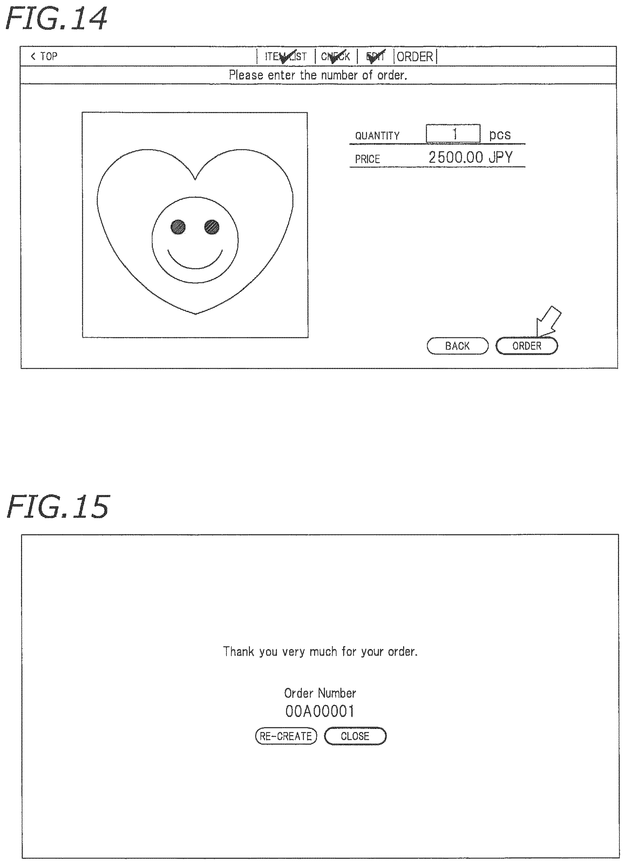

FIG. 14 illustrates an example of the final confirmation screen for the customer. The screen in FIG. 14 presents a final print order output image (which is order data provided by adding drawing data to the print order format) and a final price for the print order. The customer is able to enter a print quantity (which is represented as "QUANTITY") on this screen using the input receiver 51B. The customer is able to check a price for the print order (which is represented as "PRICE") . Upon a click on a "BACK" button in the lower area of the screen in FIG. 14 by the customer, the screen on the display 55B returns to the immediately preceding screen (i.e., the editing screen). Upon a click on an "ORDER" button (see the arrow in FIG. 14) by the customer, the presentation data generator 57B changes the screen on the display 55B to an order completion screen. In response to this, print order image data is created in the form of order data, and the order data is transmitted from the transmitter-receiver 56B to the data server 50C and stored in the memory 54C. The order data and the holder information (which is associated with the print order format included in the order data) are transmitted together from the data server 50C to the print manager 60.

FIG. 15 illustrates an example of the order completion screen. The screen in FIG. 15 indicates that the print order processor 50 has successfully received a print order. The screen in FIG. 15 presents an order number assigned to each print order in accordance with preset rule (s) . The customer is thus able to place an original print order while looking at a web catalog.

The print manager 60 transmits print data to the printer 10. The print manager 60 includes a memory 61, a converter 62, a display 63, and a transmitter-receiver 64. The print manager 60 is typically a computer. Similarly to the above-described controller 30, for example, the print manager 60 includes an I/F, a CPU, a ROM, a RAM, and a memory. The memory 61 stores customer order data and print setting information necessary to control the printer 10. Examples of the print setting information include information on the type of ink to be used for printing, information on the size of a print area, information on a predetermined print origin point that serves to define a print position coordinate system, and information on a print start position defined in accordance with the print origin point (i.e., offset information). The print setting information may vary depending on, for example, the type and/or model of the printer 10 and is thus not limited to the examples just mentioned.

The transmitter-receiver 64 of the print manager 60 receives the customer order data. In the present preferred embodiment, the transmitter-receiver 64 of the print manager 60 further receives the holder information. The converter 62 converts (or rasterizes) the order data and the print setting information stored in the memory 61 into raster data readable by the controller 30 of the printer 10. The raster data is transmitted from the transmitter-receiver 64 to the controller 30 of the printer 10.

In one example, the print manager 60 may present the holder(s) 80 on the display 63. Alternatively, the print manager 60 may present, on the display 63, a print order preview screen including the order data and the holder(s) 80. The user makes preparations for printing while checking the display 63. The user is thus able to make efficient preparations for printing so as to smoothly start an actual printing operation. Consequently, a mix-up of the holders 80 or a mistake in placing the holder 80 on the table 25 is unlikely to occur, resulting in a reduction in the occurrence of printing errors.

In one example, the converter 62 may bring together the order data for which pieces of the holder information to be used for printing on the substrates 70 are identical, and may be prevented from creating raster data until the number of pieces of order data brought together reaches a predetermined threshold value. In other words, when the number of pieces of order data, for which pieces of the holder information are identical, has reached a predetermined threshold value, the converter 62 may cause the printer 10 to perform printing on the substrates 70 collectively in accordance with the pieces of order data. The threshold value for the number of order data is, for example, a positive real number equal to or greater than two. When printing is performed using the holder 80 illustrated in FIG. 5, for example, the threshold value for the number of pieces of order data may be equal to the number of holes 80h of the holder 80 arranged in a row in the right-left direction X. In this case, the threshold value is six. Alternatively, the threshold value for the number of pieces of order data may be equal to the total number of holes 80h of the holder 80. In this case, the threshold value is 12. Consequently, the printer 10 is able to effect efficient printing, resulting in a reduction in the cost of printing.

As described above, the web catalog generator 50A is able to easily change the details of a web catalog to be presented by replacing content information included in templates. Thus, if the user is unfamiliar with programming languages, the web catalog generator 50A would enable the user to easily and repeatedly change the details of a web catalog to be presented in accordance with, for example, a seasonal function or an event. The web catalog generator 50A is able to save the cost and trouble of asking a web page creator to change the details of a web catalog to be presented. The web catalog generator 50A is able to appropriately reflect change (s) in a web catalog at any time desired by the user. This enhances the convenience of the user. The print order processor 50 enables the customer to smoothly place a print order. The printing system 100 enables the user to smoothly perform printing-related operations including receiving a print order and effecting printing on the substrate(s) 70.

The print order processor 50 or the printing system 100 is preferably used when the user who is unfamiliar with programming creates a web catalog and receives a print order from the customer. The print order processor 50 is preferably used in combination with, for example, a standalone "kiosk terminal" printer installed at a retail store, such as a mobile phone shop, a mass home electronics retailer, a photo studio, a general store, or a mall.

In the present preferred embodiment, the memory 54A and the memory 54C each store a plurality of template files. Hierarchical levels are assigned to the template files in accordance with the order in which the template files are to be presented on the web catalog display 50B. The web catalog display 50B generates presentation data for each hierarchical level. The display 55B thus presents a web catalog in a hierarchical manner. This enables the customer to smoothly place a print order.

In the present preferred embodiment, the file names of the template files include information on the hierarchical levels. The user is thus able to easily recognize the hierarchical structure of templates. This facilitates management of content of the templates by the user so as to enhance the convenience of the user.

In the present preferred embodiment, the web catalog generator 50A includes the holder association creator 53A to create association information that associates templates file(s) with information on the holder(s) 80 on which the substrate(s) 70 is/are to be disposed during printing. The user is thus able to thoroughly prepare the necessary holder(s) 80 before receiving a print order from the customer. Consequently, an error, such as a mix-up of the holders 80, is unlikely to occur during printing, resulting in enhanced user convenience.

In the present preferred embodiment, the presentation data generator 57B divides the display 55B into a plurality of areas for at least one hierarchical level, and generates, for each of the areas, presentation data in which pieces of content included in the templates belonging to the same hierarchical level are arranged. This extends the range of choices for the customer so as to meet diverse needs of the customer who places a print order.

In the present preferred embodiment, the web catalog generator 50A and the web catalog display 50B are able to communicate with the memory 54C so as to transmit and receive data to and from the memory 54C. The memory 54C stores information on the holder(s) 80 on which the substrate (s) 70 is/are to be disposed during printing, and association information that associates the template file(s) with the holder(s) 80. The web catalog display 50B includes the determiner 571B to determine that the template(s) associated with the holder(s) 80 is/are selectable. The presentation data generator 57B generates presentation data using the template(s) determined to be selectable by the determiner 571B. The web catalog generator 50A is thus able to reflect user's intention so as to generate, for example, a web catalog that intentionally does not include predetermined content.

The web catalog generator 50A according to the present preferred embodiment, the print order processor 50 including the web catalog generator 50A, and the printing system 100 including the print order processor 50 have been described thus far. Web catalog generators according to preferred embodiments of the present invention, print order processors including the web catalog generators, and printing systems including the print order processors, however, are not limited to those described above.

In the example illustrated in FIG. 1, the web catalog generator 50A and the web catalog display 50B are external devices connected to the print manager 60. The present invention, however, is not limited to this example. Alternatively, the web catalog generator 50A and the web catalog display 50B may be independently incorporated into the print manager 60. The print manager 60 may be incorporated into, for example, the controller 30 of the printer 10.

In the example illustrated in FIG. 2, the printer 10 is an inkjet printer. The present invention, however, is not limited to this example. Alternatively, the printer 10 may use a printing method other than an inkjet method. The printer 10 may be, for example, a thermal transfer printer (which may be a dye sublimation printer), a laser printer, a dot-impact printer, a thermal printer, or an electrosensitive printer. The printer 10 may be, for example, a hot stamping device to effect "hot stamping printing" that involves pressing a foil sheet (such as metallic foil or pigment foil) against a substrate. The printer 10 may be one of the printers mentioned above or any combination of two or more of the printers mentioned above. In one example, the printer 10 may include an inkjet printer and a hot stamping device each of which is connected to the print manager 60 during use.

In the example illustrated in FIG. 1, the web catalog display 50B functions as a print order receiver to directly receive a print order from the customer. The present invention, however, is not limited to this example. The web catalog display 50B may be any type of display that presents a web catalog visible to the customer. In such a case, the web catalog display 50B may include no input receiver 51B.

The printer 10 is not limited to any particular configuration or structure. In one example, the printer 10 may include at least one of: a cutting head to cut the substrate (s) 70; a hot stamping tool to transfer a foil sheet (e.g., transfer foil, such as metallic foil or pigment foil) to the substrate(s) 70; and a decorating tool to perform at least one of imprinting and engraving on the substrate(s) 70.

The foregoing preferred embodiments have been described on the assumption that the printer 10 is a "shuttle (or serial) printer" that includes the ink heads 23 mounted on the carriage 19 and effects printing while reciprocating (or shuttling) the carriage 19 in the right-left direction X. The printer 10, however, is not limited to this type of printer. Alternatively, the printer 10 may be a "line printer" that includes line heads and effects printing, with the line heads held stationary.

In the foregoing preferred embodiments, the printer 10 includes the carriage 19 movable in the right-left direction X, and the table 25 movable in the front-rear direction Y. The printer 10, however, is not limited to this structure. Alternatively, either one of the carriage 19 and the table 25 may move in the right-left direction X or the front-rear direction Y such that the carriage 19 and the table 25 move relative to each other. In another alternative example, the carriage 19 may be disposed immovably, and the table 25 may be movable in both of the right-left direction X and the front-rear direction Y.

In the foregoing preferred embodiments, the printer 10 includes the ultraviolet lamps 24. The ultraviolet lamps 24, however, are not essential. The printer 10 may include no ultraviolet lamps 24. In such a case, the ink cartridges 21 and 22 may each store ink other than ultraviolet curable ink.

The terms and expressions used herein are for description only and are not to be interpreted in a limited sense. These terms and expressions should be recognized as not excluding any equivalents to the elements shown and described herein and as allowing any modification encompassed in the scope of the claims. The present invention may be embodied in many various forms. This disclosure should be regarded as providing preferred embodiments of the principles of the present invention. These preferred embodiments are provided with the understanding that they are not intended to limit the present invention to the preferred embodiments described in the specification and/or shown in the drawings. The present invention is not limited to the preferred embodiments described herein. The present invention encompasses any of preferred embodiments including equivalent elements, modifications, deletions, combinations, improvements and/or alterations which can be recognized by a person of ordinary skill in the art based on the disclosure. The elements of each claim should be interpreted broadly based on the terms used in the claim, and should not be limited to any of the preferred embodiments described in this specification or used during the prosecution of the present application.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A web catalog generator (50A) to generate a web catalog including content to be presented on a customer terminal, the web catalog generator (50A) comprising:
a memory (54A) to store at least one template file that specifies the content and a presentation position where the content is to be presented, the at least one template file including at least one template;
an input receiver (51A) to receive content information that is information on the content; and
a main generator (52A) to replace content information already included in the at least one template file with the content information received by the input receiver, and cause the memory (54A) to store the template file including the content information received by the input receiver.

2. The web catalog generator (50A) according to claim 1, wherein
the at least one template file to be stored in the memory (54A) includes a plurality of template files; and
hierarchical levels are assigned to the template files in accordance with an order in which the template files are to be presented on the customer terminal.

3. The web catalog generator (50A) according to claim 2, wherein
file names including information on the hierarchical levels are assigned to the template files.

4. The web catalog generator (50A) according to any one of claims 1 to 3, further comprising a holder association creator (53A) to create association information that associates the at least one or plurality of template files with information on a holder (80) on which at least one substrate (70) is to be disposed during printing.

5. A print order processor (50) comprising:
a web catalog generator (50A) to generate a web catalog including content; and
a web catalog display (50B) connected to the web catalog generator (50A) to enable data communication with the web catalog generator (50A), the web catalog display being configured to present the content of the web catalog, wherein
the web catalog generator (50A) includes:
a memory (54A) to store at least one template file that specifies the content and a presentation position where the content is to be presented, the at least one template file including at least one template;
an input receiver (51A) to receive content information that is information on the content;
a main generator (52A) to replace content information already included in the at least one template file with the content information received by the input receiver, and cause the memory (54A) to store the at least one template file including the content information received by the input receiver; and
a transmitter (56A) to transmit the at least one template file; and
the web catalog display (50B) includes:
a receiver (51B) to receive the template file;
a presentation data generator (57B) to generate presentation data in which the content included in the template is located at the presentation position; and
a display (55B) to present the presentation data.

6. The print order processor (50) according to claim 5, wherein
the at least one template file to be stored in the memory (54A) of the web catalog generator (50A) includes a plurality of template files;
hierarchical levels are assigned to the template files in accordance with an order in which the template files are to be presented on the web catalog display (50B); and
the presentation data generator (57B) generates the presentation data for each of the hierarchical levels.

7. The print order processor (50) according to claim 6, wherein
the presentation data generator (57B) divides the display into a plurality of areas for at least one of the hierarchical levels, and generates, for each of the areas, presentation data in which pieces of the content included in the templates belonging to a same one of the hierarchical levels are arranged.

8. The print order processor (50) according to any one of claims 5 to 7, further comprising a memory area (54C) to enable data communication with the web catalog generator (50A) and the web catalog display (50B), wherein
the memory area (54C) stores information on a holder (80) on which at least one substrate (70) is to be disposed during printing, and association information that associates the at least one or plurality of template files with the holder (80),
the web catalog display (50B) further includes a determiner (571B) to determine that the template associated with the holder is selectable, and
the presentation data generator (57B) generates the presentation data using the template determined to be selectable by the determiner (571B).

9. A printing system (100) comprising:
the print order processor (50) according to any one of claims 5 to 8;
a print manager (60) connected to the print order processor (50) to enable data communication with the print order processor (50); and
a printer (10) connected to the print manager (60) to enable data communication with the print manager (60); wherein
the print order processor (50) further includes:
an order data generator (57B) to generate image data of a print order placed by a customer; and
a transmitter (56B) to transmit the image data of the print order to the print manager (60); and
the print manager (60) includes:
a memory (61) to store print setting information necessary to control the printer (10); and
a transmitter (64) to transmit the image data of the print order and the print setting information to the printer (10) .

10. A non-transitory computer-readable storage medium that stores a computer program to cause a computer to operate as the web catalog generator (50A) according to any one of claims 1 to 4.
